# EUROPEAN PATENT APPLICATION

(11) **EP 1 361 440 A1**
(43) Date of publication of application: **12.11.2003**
(21) Application number: 02076857.8
(22) Date of filing: 10.05.2002
(51) Int. Cl.: G01N 35/04

(54) **Method and apparatus for transporting a plurality of test tubes in a measuring system**

(71) Applicant: F. Hoffman-la Roche AG, 4070 Basle (CH)
(72) Inventor: Fattinger, Christof, 4223 Blauen (CH); Hochstrasser, Remo Anton, 4104 Oberwil (CH); Tschirky, Hansjörg, 4107 Ettingen (CH)
(74) Representative: Ventocilla, Abraham

(57) **Abstract**

Method and apparatus for transporting a plurality of test tubes (11) in measuring system, the test tubes being carried by a test tube carrier (21) which comprises a plurality of compartments (22), each of which is adapted to receive and hold a test tube. The apparatus comprises:
(a) transport means (41) for moving a first test tube carrier (21) stepwise and aligning a compartment (22) of the test tube carrier with a receiving opening (31) of a measuring apparatus (32),
(b) transfer means (51) for transferring one after the other a plurality of test tubes from the first test tube carrier (21) to a predetermined position in the measuring apparatus (32) by displacing each test tube in a first sense along a vertical axis (Z).

The transfer means are adapted for transferring a test tube (11) from predetermined position in the measuring apparatus to a compartment of the first test tube carrier or of a second test tube carrier (61) by displacing the test tube along the vertical axis (Z) in a second sense opposite to the first sense.

## Description

### FIELD OF THE INVENTION

The invention concerns a method according to the preamble of claim 1.

The invention further concerns an apparatus according to the preamble of claim 4.

### BACKGROUND OF THE INVENTION

In particular in the field of pharmaceutical research it is necessary to analyze large arrays of samples obtained from combinatorial chemistry, biological screening or compound depositories. The samples are normally contained in sample wells of a standard microtiter plate or are stored in separate containers being arranged in racks having a shape similar to the shape of a microtiter plate. The use of such microtiter plates has several advantages, e.g. it makes possible an orderly handling of the samples, parallel pipetting of samples with commercially available multichannel pipettors, reduced risk of sample handling mistakes and a safe conservation of samples. Samples contained in microtiter plates or racks similar to microtiter plates are usually transferred from there to corresponding test tube arrays for further processing and/or measurements. The test tubes are usually arranged in test tube carriers which have a matrix array of e.g. 96 or 384 compartments, each of which is adapted to receive a test tube.

In analyzer systems where only one measuring position is available, a large number of test tubes containing samples to be analyzed have to be successively brought from test tube carriers each of which holds an array of test tubes to the measuring position and this is a time consuming operation.

Conventional use of a roboter arm with a gripper that would move each of the test tubes to be transferred from its position in the test tube carrier to the measuring position and from there back to the tube's position in the test tube carrier requires a relative large amount of time for the handling of the test tubes. Moreover, a conventional roboter arm having the required accuracy for handling very small test tubes which are very close to each other is very expensive.

There is therefore a need for a method and apparatus for automatically handling of a large number of test tubes, e.g. 1000 or more, in shorter time and at a lower cost.

### SUMMARY OF THE INVENTION

An aim of the invention is therefore to provide a method and an apparatus for automatically handling of a large numbers of test tubes in shorter time and at relatively low cost in order to effect analytical measurements of samples contained in those tubes at a single measuring position within a measuring system.

According to a first aspect of the invention this aim is achieved by means of a method defined by claim 1. Claims 2 and 3 define preferred embodiments of this method.

According to a second aspect of the invention this aim is achieved by means of an apparatus defined by claim 4. Claims 5 to 10 define preferred embodiments of this apparatus.

The main advantages obtained with a method and an apparatus according to the invention are that they make possible to handle and analyze automatically large numbers of samples in shorter time and at lower cost than by conventional robotic means. These advantages are obtained by means of a transport apparatus characterized by the simplicity of the movements of the parts moved (test tube carrier, gripper which holds and moves a test tube) and by the low amount of mass moved in each of the movements required for the operation of the apparatus.

Use of a method and an apparatus according to the invention is particularly advantageous in a measuring system in which large numbers of test tubes have to be analyzed in a measuring system in which samples contained in the test tubes are analyzed by means of NMR-measurements.

### BRIEF DESCRIPTION OF THE DRAWINGS

The subject invention will now be described in terms of its preferred embodiments with reference to the accompanying drawings. These embodiments are set forth to aid the understanding of the invention, but are not to be construed as limiting.
Fig. 1 shows a schematic perspective view showing components of an embodiment of an apparatus according to the invention.
Fig. 2 shows an enlarged view of a zone 18 of Fig. 1 wherein alignment of a compartment 22 of a test tube carrier 21 with a receiving opening 31 of a measuring apparatus 32 is represented.
Fig. 3 shows a schematic perspective view showing components of an embodiment of an apparatus according to the invention, wherein a compartment 29 of a test tube carrier 21 is aligned with a receiving opening 31 of a measuring apparatus 32.
Fig. 4 shows an enlarged view of a zone 19 of Fig. 3.
Fig. 5 shows a schematic perspective view of the apparatus shown by Fig. 1, but from an opposite point of view
Fig. 6 shows a perspective view of a test tube carrier 21.
Fig. 7 shows a top plan view of test tube carrier 21 in Fig. 3.
Fig. 8 shows a cross-sectional view of test tube carrier 21 along line V-V in Fig. 8.
Fig. 9 shows an enlarged view of a zone 24 of Fig. 8.
Fig. 10 shows a view similar to Fig. 9, but showing different embodiments of test tubes.
Fig. 11 shows a perspective partially cross-sectional view of gripper 51 in Fig. 9 depicting in particular a test tube holding mechanisms.
Fig. 12 shows a perspective view of gripper 51 in Fig. 9 and of sliding rod 52 which in Fig. 11 is slidably arranged within gripper 51.
Fig. 13 shows a first cross-sectional view of the gripper 51 and test tube 11 in Fig. 11 along a length symmetry axis of test tube 11. This view shows a first position of sliding rod 52 of gripper 51 (test tube released).
Fig. 14 shows a second cross-sectional view of the gripper 51 and test tube 11 in Fig. 11 along a length symmetry axis of test tube 11. This view shows a second position of sliding rod 52 of gripper 51 (test tube engaged and held by end part of gripper).
Fig. 15 shows a cross-sectional view similar to Fig. 13, but with a test tube that has a different shape.
Fig. 16 shows a cross-sectional view similar to Fig. 14, but the test tube that having the shape shown in Fig. 15.
Fig. 17 shows a cross-sectional view similar to Fig. 8, but with test tubes that have a different shape.
Fig. 18 shows an enlarged view of a zone 24 of Fig. 17.

| REFERENCE NUMERALS IN DRAWINGS | |
|---|---|
| 11 | test tube |
| 11a-11c | test tube |
| 12 | upper part of test tube |
| 12a-12c | upper part of test tube |
| 13 | lower part of test tube |
| 13a-13c | lower part of test tube |
| 14 | ridge |
| 15 | ridge |
| 16 | conduit |
| 18 | zone of Fig. 1 |
| 19 | zone of Fig. 3 |
| 21 | first test tube carrier |
| 22 | compartment of test tube carrier 21 |
| 23 | projection |
| 24 | zone of Fig. 8 respectively 17 |
| 25 | top end opening |
| 26 | bottom end opening |
| 29 | compartment of test tube carrier 21 |
| 31 | receiving opening |
| 32 | measuring apparatus |
| 41 | transport carriage |
| 42 | motor for transport in X-direction |
| 43 | motor for transport in Y-direction |
| 44 | basis frame for motors 42, 43 |
| 45 | basis frame for transport device including gripper 51 |
| 51 | gripper |
| 52 | sliding rod |
| 53 | end part of sliding rod 52 |
| 54 | end part of gripper 51 |

### DETAILED DESCRIPTION OF PREFERRED EMBODIMENTS

### EXAMPLE OF AN EMBODIMENT OF AN APPARATUS ACCORDING TO THE INVENTION

A first embodiment of an apparatus according to the invention for automatically transporting a plurality of test tubes 11 in a measuring system is described hereinafter. In that system measurements a single measuring position 32 is available for measuring test tubes one at a time, e.g. for analytical purposes.

### TRANSPORT MEANS FOR MOVING THE TEST TUBES TO AND FROM A MEASURING APPARATUS

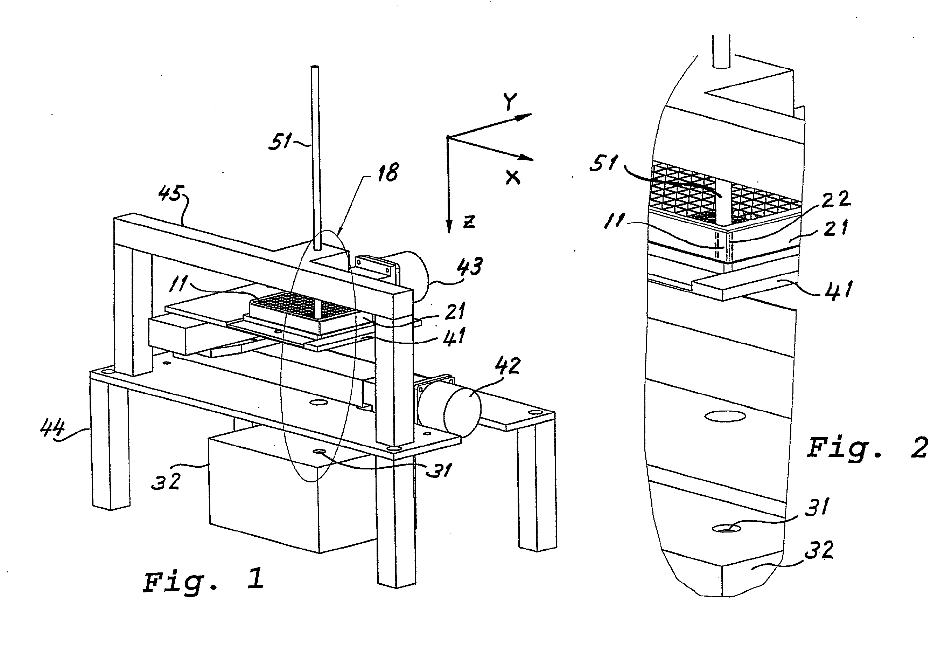

Fig. 1 shows a perspective view of an apparatus according to the invention for automatically transporting a plurality of test tubes 11 in a measuring system for performing measurements on samples contained in the test tubes.

Test tubes 11 are carried by a test tube carrier 21 having an array of compartments 22 each of which is adapted to receive and hold one of the test tubes 11.

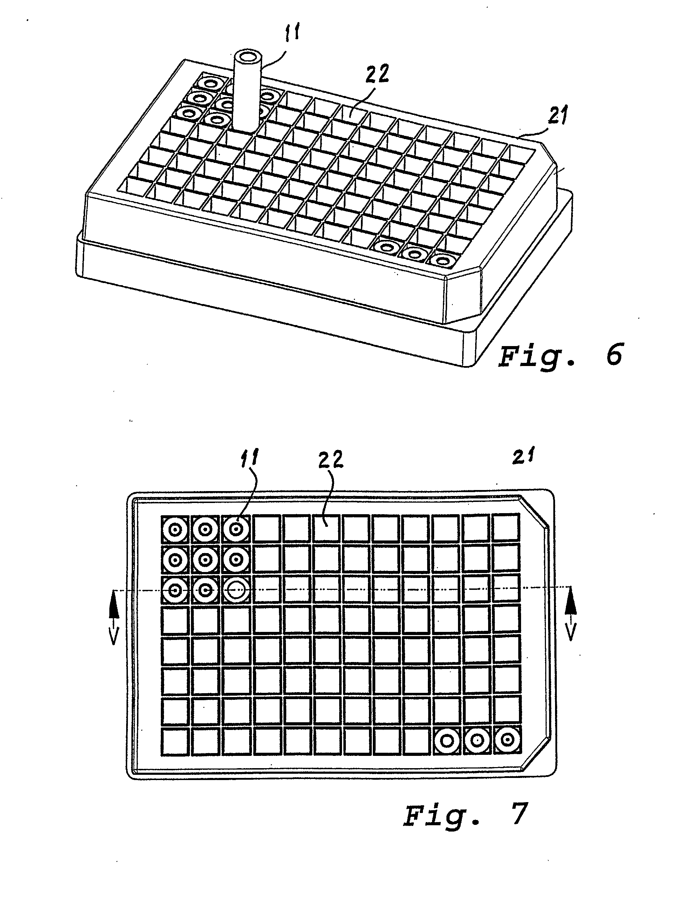

Test tubes 11 and test tube carrier 21 are described in detail hereinafter with reference to Figures 6 to 11, 13 and 14.

The apparatus shown by Figs. 1 comprises a carriage 41 adapted to hold and move a test tube carrier 21 along directions indicated by X- and Y-axis respectively and a gripper 51 adapted to be moved in opposite senses in the direction of the Z-axis represented in Fig. 1 by means of an associated transport device.

Carriage 41 is part of transport means which serve for moving test tube carrier 21 within the measuring system and for successively aligning one of the compartments 22 of test tube carrier 21 and thereby a test tube 11 arranged in that compartment with a receiving opening 31 of a measuring apparatus 32 which belongs to the measuring system.

Carriage 41 and thereby a test tube carrier hold by carriage 41 are moved stepwise by means of a motor 42 in X-direction or a motor 43 in Y-direction. During this movement a basis outer surface of first test tube carrier 21 lies substantially in a plane defined by two axis X respectively Y which extend each along one of those directions. Directions X and Y are perpendicular to each other. In Fig. 1 the X-axis and the Y-axis define a horizontal plane.

The motions steps carried out with carriage 41 are thus very simple and involve a low amount of mass.

As shown by Fig. 1, carriage 41 and motors 42 and 43 are mounted on a basis frame structure 44. Gripper 51 is held by a frame structure 45 which allows displacement of gripper 51 in the direction of the Z-axis. In the example shown the Z-axis is a vertical axis and is thus perpendicular to the plane defined by axis X and Y.

Motors 42 and 43 are operated by a control unit (not shown) in order to effect movement of carriage 41 according to a predetermined sequence of steps and thereby successively align one at a time a compartment of test tube carrier with receiving opening 31.

When carriage 41 is at the position shown in Fig. 1, gripper 51 is aligned with a compartment 22 of test tube carrier 21 and this compartment is aligned with receiving opening 31 of measuring apparatus 32. This alignment is represented in detail in Fig. 2 which shows an enlarged view of zone 18 in Fig. 1. The alignment just described makes possible to move a test tube 11 located in compartment 22 out of this compartment and to introduce test tube 11 through receiving opening 31 of measuring apparatus 32 by a simple displacement of the test tube in the direction of the Z-axis only. During this displacement, which is carried out by gripper 51, the length axis of test tube 11 is and remains parallel to the Z-axis.

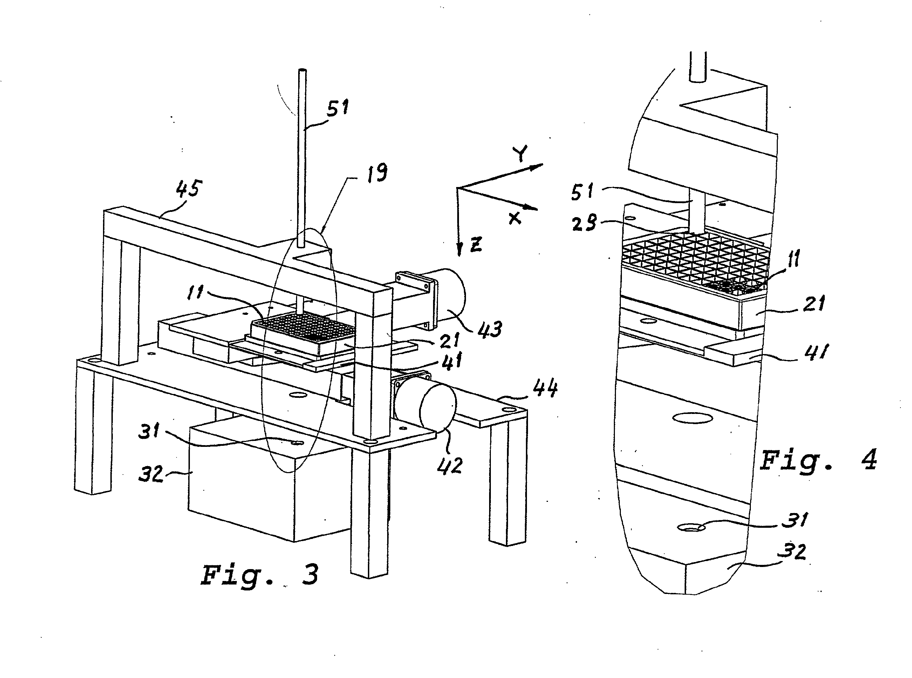

Fig. 3 shows the same apparatus as Fig. 1 but with carriage 41 at a different position. When carriage 41 is at this position, gripper 51 is aligned with a compartment 29 of test tube carrier 21 and this compartment is aligned with receiving opening 31 of measuring apparatus 32. This alignment is represented in detail in Fig. 4 which shows an enlarged view of zone 19 in Fig. 3. Also in this case, the alignment just described makes possible to move a test tube 11 located in compartment 29 out of this compartment and to introduce test tube 11 through receiving opening 31 of measuring apparatus 32 by a simple displacement of the test tube in the direction of the Z-axis only. During this displacement, which is carried out by gripper 51, the length axis of test tube 11 is and remains parallel to the Z-axis.

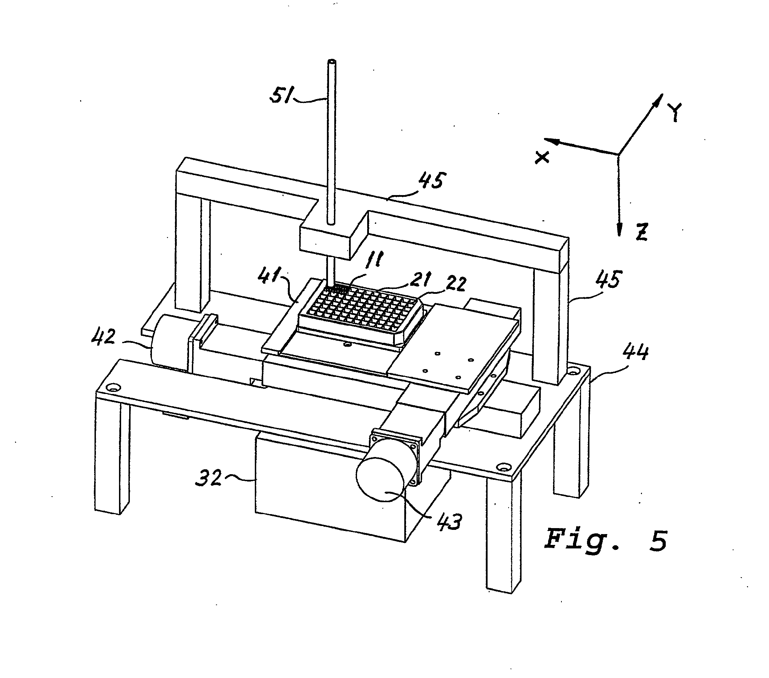

Fig. 5 shows a schematic perspective view the apparatus shown by Fig. 1, but from an opposite point of view. Fig. 5 shows the arrangement of carriage 41, motors 42, 43, gripper 51 and their associated mechanical structure including basis frames 44 and 45, and measuring apparatus 32.

### TEST TUBE CARRIER

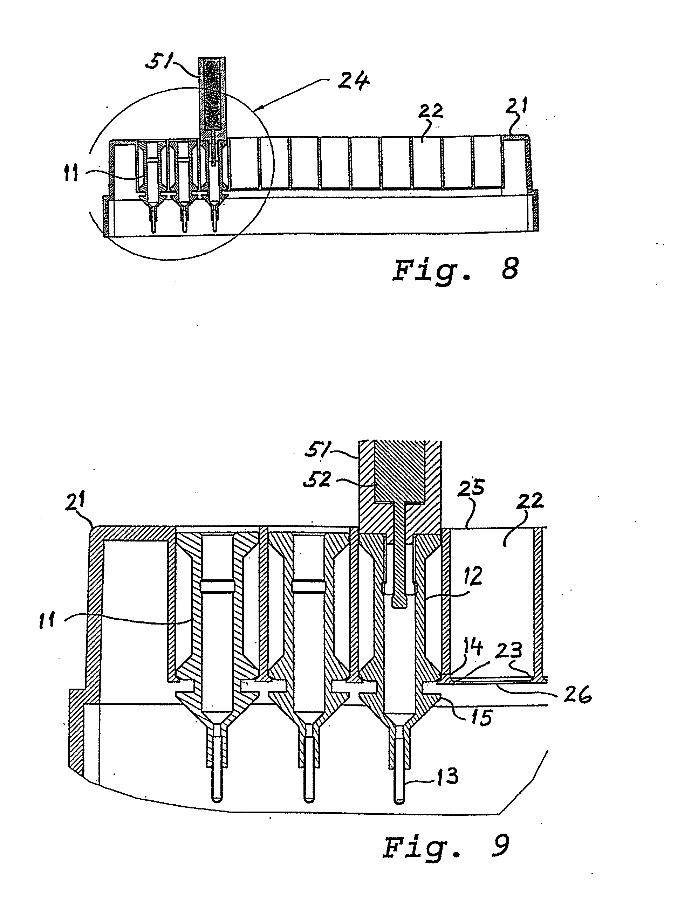

As shown by Fig. 6, a test tube carrier 21 has a matrix array of e.g. 96 compartments 22 each of which is adapted to receive and hold a test tube 11. Each compartment 22 has a top end opening 25 and a bottom end opening 26. In Fig. 6 test tube is only represented schematically, that is without showing the real shape of test tube in detail. Preferred examples of the shape of test tube 11 are represented in Figures 8, 9, 10, 11, 13 and 14.

The inner wall of each compartment 22 has preferably at least one projection 23 which is adapted to cooperate with a depression of the outer surface of a test tube 11 inserted in the compartment in order to define accurately a predetermined resting position of the test tube in the compartment when the test tube is inserted into the compartment.

Test tube carrier 21 is preferably a single piece frame of rectangular shape manufactured by injection molding of a suitable plastic material and has e.g. the following standard dimensions: an outer width of 86.7 millimeters, an outer length of 127 millimeters and a pitch of 9 millimeters between adjacent compartments.

Instead of test tube carrier 21 in Fig. 6, a similar test tube carrier can be used which has the same standard dimensions and a similar array of 384 smaller compartments for receiving smaller test tubes. Such a test tube carrier has a pitch of 4.5 millimeters between adjacent compartments.

### TEST TUBES

Test tubes 11 may in principle have any shape and dimensions suitable for the intended measurement to be performed on the samples contained in the test tubes. In a particular test tube embodiment described hereinafter the sample containing part of the tube is a thin glass capillary tube. Such a test tube is suitable e.g. for performing NMR measurements.

In the following description the test tubes 11 are represented as test tubes having an upper end opening. In an alternative embodiment not represented in the accompanying drawings, the open upper end of the test tubes can however be closed by a piercable closure like a foil or by a septum having a Y-shaped cutting which allows piercing of the septum.

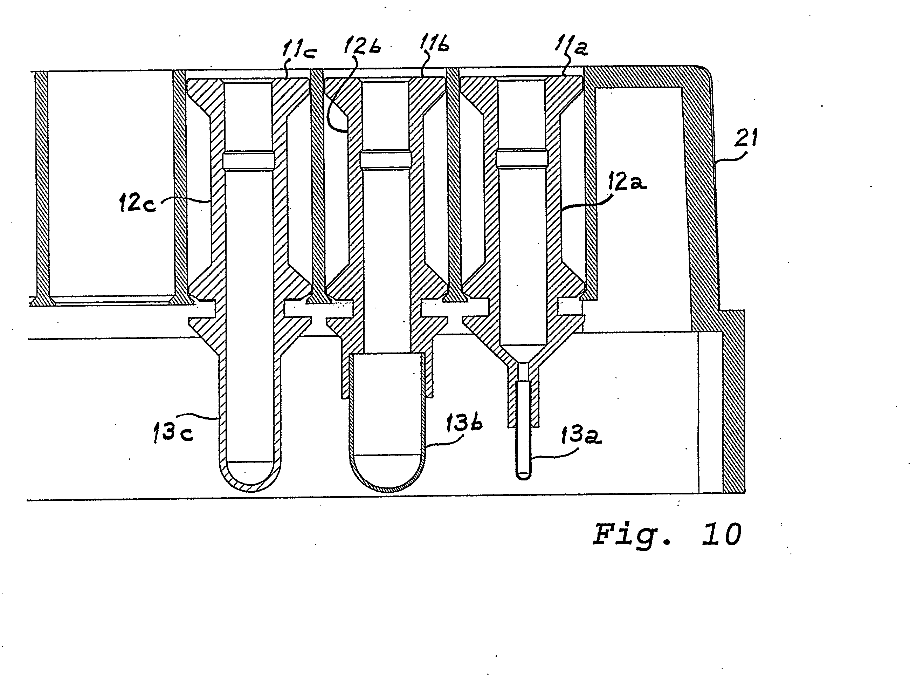

In the embodiment described hereinafter as example, a test tube 11 has e.g. the structure shown in particular by Figures 9 to 11 and 13 to 16 and is composed of an upper part 12, which comprises a conduit 16, and a lower part 13 which is e.g. a glass capillary tube connected to conduit 16. This capillary tube has an outer diameter in a range from about 1 to 5 millimeters.

Upper part 12 of the test tube is made e.g. by injection molding of a suitable plastic material and is so configured and dimensioned to serve as an adapter member enabling an accurate positioning of the entire test tube with respect to the compartment 22 into which the test tube is inserted. For this purpose upper part 12 has e.g. two ridges 14, 15 which form a depression between them and are adapted to cooperate with projection 23 of compartment 22 in order to define a predetermined resting position of upper part 12 of test tube 11 in compartment 22. When upper part 12 is introduced into a compartment 22, projection 23 of compartment 22 snaps in between ridges 14 and 15 and thereby accurately defines the resting position of the test tube in the compartment.

As shown by Fig. 10, test tubes 11a and 11b having the structure just described can have lower parts 13 a respectively 13 b having different dimensions. In a preferred embodiment, the lower part of a test tube is identical with the storage container of a sample. In this case one and the same container is used as sample storage container and test tube. This simplifies the sample transfer operation.

As shown by Fig. 10, a test tube 11c having the basic structure described above can also be a single piece test tube made of a plastic material. In this case upper part 12c and lower part 13c of the test tube are integrated into a single piece.

### TEST TUBE GRIPPER AND TRANSPORT DEVICE FOR MOVING THE GRIPPER

Gripper 51 represented in Figures 1-5 is moved by a suitable transport device. The operation of this transport device and of gripper 51 is also controlled by the control unit which controls the operation of motors 42 and 43 used for moving carriage 41. The operation of the latter transport means is thus synchronized with the operation of gripper 51 and the transport device which moves the gripper, in order to use gripper 51 for transferring one after the other a plurality of test tubes 11 from test tube carrier 21 to a predetermined position in measuring apparatus 32.

Before effecting the above mentioned transferring of a test tube, the compartment that contains the test tube to be transferred is aligned with receiving opening 31 of measuring apparatus 32 by a proper positioning of carriage 41 and test tube carrier 21 on that carriage with respect to receiving opening 31, and gripper 51 then displaces the test tube downwards in the direction of the Z-axis. By means of this displacement, the test tube being moved is introduced through opening 31 of measuring apparatus 32 and brought to the predetermined position within the latter apparatus.

Gripper 51 and its associated transport device are also adapted for transferring a test tube 11 from the predetermined position in measuring apparatus 32 to a compartment of a test tube carrier by displacing the test tube upwards along the Z-axis.

The motion steps carried out with gripper 51 are thus very simple and involve a low amount of mass.

In a preferred embodiment, gripper 51 transfers a test tube from the test tube carrier 21 to a predetermined position in measuring apparatus 32 and after a measurement of a sample contained in the test tube is effected in the latter apparatus, gripper 51 transfers the test tube back to test tube carrier 21 and preferably to the same compartment where it was originally located.

In another embodiment, gripper 51 transfers a test tube from a first test tube carrier 21 to measuring apparatus 32 where a measurement of a sample contained in the test tube is effected and after this measurement gripper 51 transfers the test tube to a compartment of a second test tube carrier (not shown).

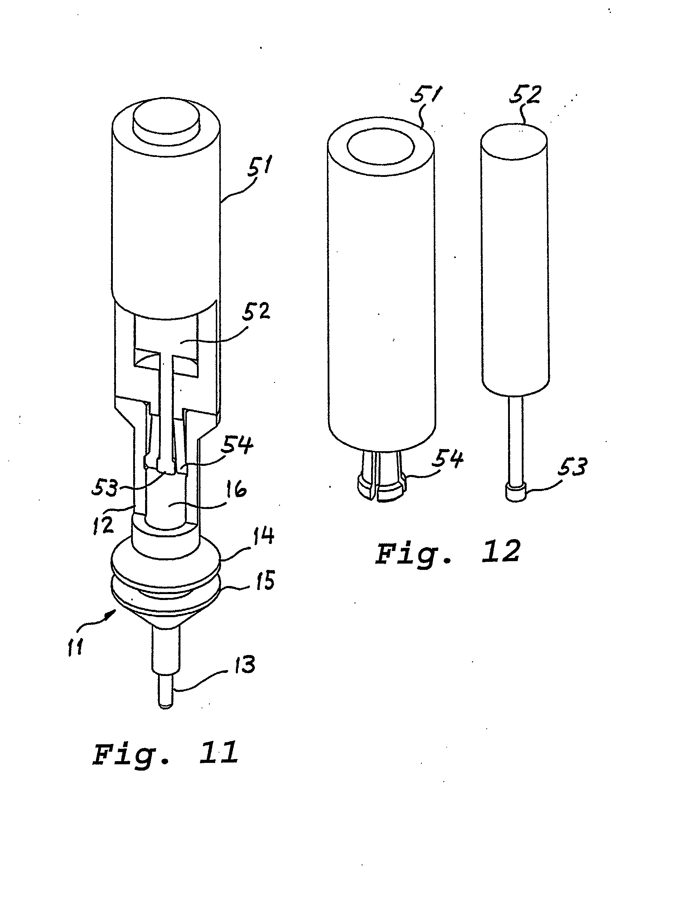

As shown in particular by Figs. 11 to 14, gripper 51 preferably includes a sliding rod 52 which has an end part 53. The lower end part 54 of gripper 51 comprises a deformable chamber which is so configured and dimensioned that axial displacement of end part 53 of sliding rod 52 within that chamber modifies the outer diameter of the lower end part 54 of gripper 51.

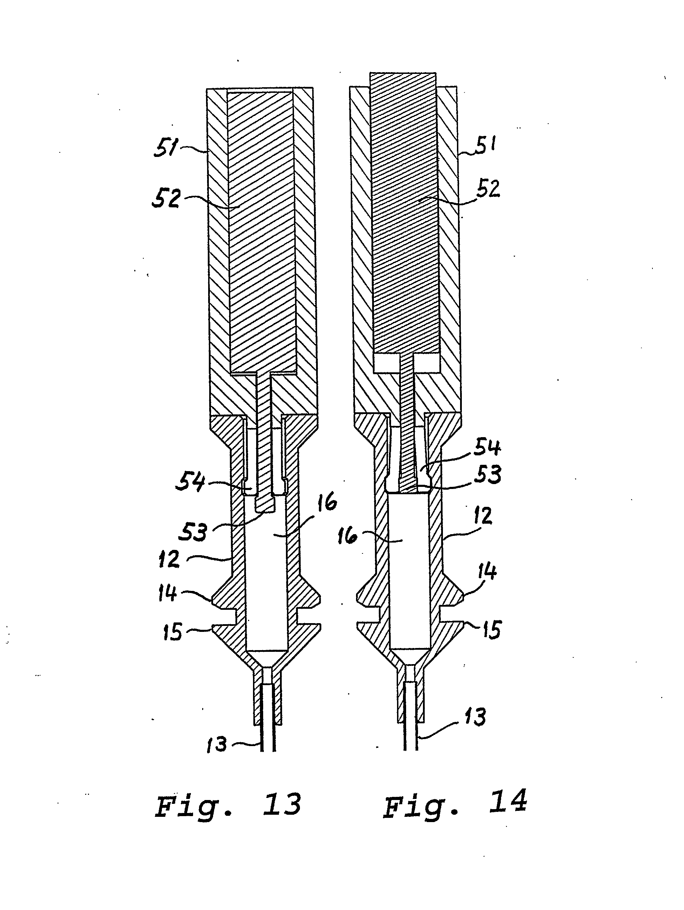

When end part 53 of sliding rod 52 is positioned as shown in Fig. 13, the lower end part 54 of gripper 51 is slightly smaller than the inner diameter of conduit 16 in the upper part 12 of test tube 11, and gripper 51 can be introduced into or withdrawn from conduit 16 without difficulty.

When the end part 53 of sliding rod 52 is displaced and takes the position shown in Fig. 14 it causes a widening of the outer diameter of the end part 54 of gripper 51 and this causes engagement of gripper 51 with the upper part 12 of test tube 11 and makes it possible to displace test tube 11, e.g. for pushing it out of a compartment 22 of test tube carrier 21 or for pulling back and reintroducing test tube 11 into that compartment. A reverse displacement of sliding rod 52 brings its end part 53 back to the relative position shown in Fig. 13 and gripper 51 is then disengaged from the test tube and can be withdrawn therefrom.

The above mentioned displacements of sliding rod 52 within gripper 51 are effected by any suitable means, e.g. by air pressure having a positive or a negative value depending on the sense of the displacement to be effected.

### INSERTION OF A TEST TUBE INTO A COMPARTMENT OF TEST TUBE CARRIER 21 AND WITHDRAWAL OF A TEST TUBE FROM SUCH A COMPARTMENT

In preferred embodiments shown by Figures 8 to 10, 13 and 14, the test tubes have as a common feature that with the test tube orientation shown, the shape of the test tube only allows its insertion into and its withdrawal from a compartment 22 through the bottom end opening 26 of compartment 22. These embodiments have the advantage of preventing that a test tube may accidentally be pulled out of the compartment, if the removable connection between a gripper used to move the tubes and a tube fails to release the tube after it has reached its proper position in a compartment.

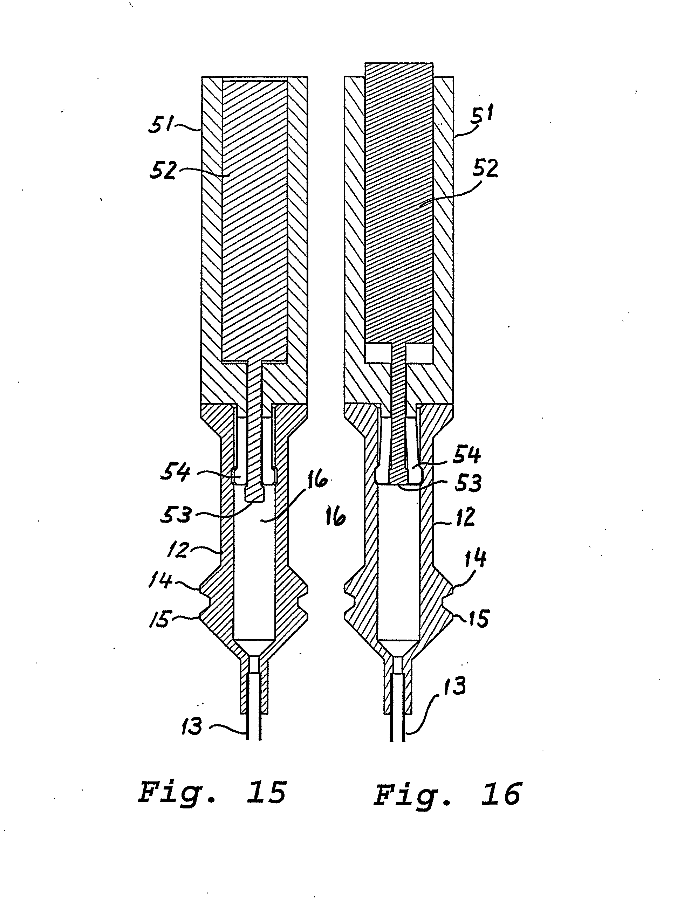

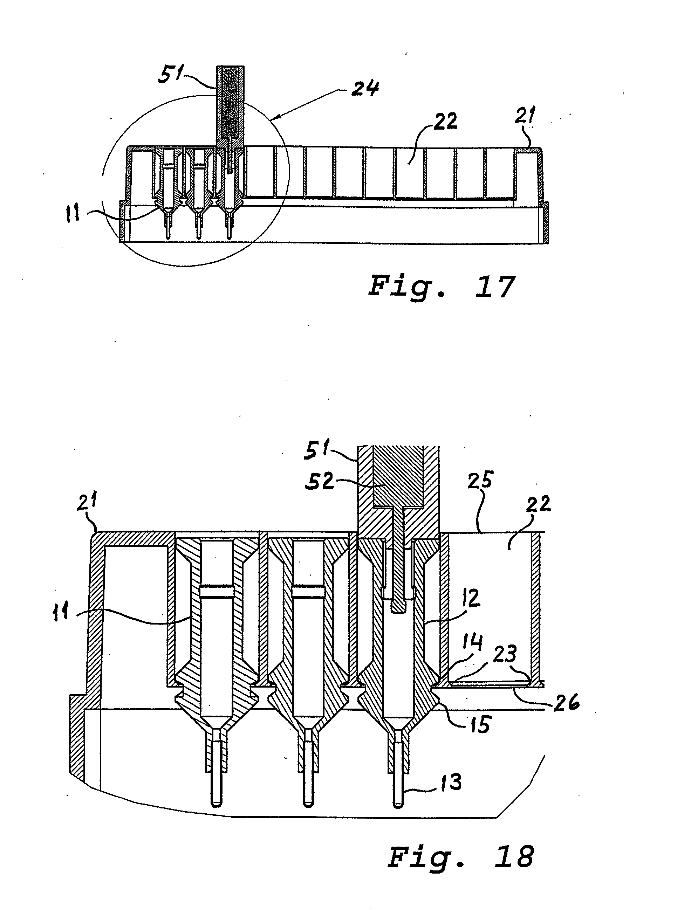

However, in some cases different embodiments with test tubes having the shape shown by Figures 15 to 18 may be preferred. In this embodiments each compartment 22 of test tube carrier 21 and each of the test tubes are so configured and dimensioned that the upper part 12 of the test tube can be inserted into the compartment 22 either through the upper end opening 25 or the bottom end opening 26 of compartment 22 and without changing the orientation of the test tube 11 with respect to test tube carrier 21. The elasticity of the material used to make the test tubes contributes to obtain this property. The orientation of the test tubes with respect to the compartments is e.g. as shown in Figure 9.

### EXAMPLE OF AN EMBODIMENT OF A METHOD ACCORDING TO THE INVENTION

A method according to the invention is carried out automatically and preferably with an apparatus according to the invention having e.g. the structure described above with reference to Figures 1 to 4. Preliminary steps include the loading of test tubes 11 containing the samples to be analyzed in test tube carriers 21 and loading one of this carriers on carriage 41 of the above described transport means for transporting test tube carriers within the measuring system.

A method according to the invention comprises the following steps:
(a) moving a first test tube carrier 21 within the measuring system for successively aligning a compartment 22 of the first test tube carrier 21 and thereby a test tube 11 arranged in that compartment with a receiving opening 31 of a measuring apparatus 32 which belongs to the measuring system,
   the moving of the first test tube carrier 21 being effected stepwise, each motion step being in one of two directions X, Y which are perpendicular to each other, and with a basis outer surface of the first test tube carrier 21 lying substantially in a plane defined by two axis X, Y which extend each along one of those directions,
(b) transferring one after the other a plurality of test tubes from the first test tube carrier 21 to a predetermined position in the measuring apparatus 32 by displacing each test tube being transferred in a first sense along a third axis Z which is substantially perpendicular to that plane,
   a compartment of the first test tube carrier 21 being aligned with the receiving opening 31 of the measuring apparatus 32 for effecting the transfer of a test tube and said test tube being introduced through said receiving opening 31 into the measuring apparatus 32,
(c) effecting in the measuring apparatus 32 a measurement on a sample contained in the test tube transferred to the measuring apparatus 32, and
(d) transferring the test tube 11 after that measurement from the predetermined position in the measuring apparatus 32 to a compartment of a second test tube carrier 61 by displacing the test tube along the third axis Z in a second sense opposite to the first sense.

Transfer of a test tube 11 from its position in a compartment 22 to a predetermined position in measuring apparatus 32 is initiated by ejecting test tube 11 from compartment 22. This is carried out by griper 51 which for this purpose is introduced into and engages conduit 16 of test tube 11. Gripper 51 then pushes test tube 11 downwards in Z-direction out of compartment 22. The elasticity of the walls of the upper part 12 of test tube 11 allows this operation.

Further displacement of test tube 11 by means of gripper 51 brings tube 11 through a receiving opening 31 of measuring apparatus 32 to the above-mentioned predetermined position in the latter apparatus. Once at the latter position tube 11 can be transferred by gripper 51 or by any other suitable means to a measurement position within apparatus 32.

After a test tube 11 is measured at the measurement position in measuring apparatus 32, this tube is transferred to a compartment of a test carrier. This transfer is carried out preferably by the same means used to bring the test tube to the measurement position. For this purpose gripper 51 is used to pull test tube 11 upwards either into its original compartment 22 in test tube carrier 21, or into a compartment 62 (not shown) of a different test tube carrier 61 (not shown), until a projection of the inner wall of the compartment snaps between ridges 14 and 15 of the outer wall of upper part 12 of test tube 11 and the test tube reaches its resting position in the compartment.

The method steps described above are carried out with respect to a plurality of test tubes carried by a test tube carrier 21 being processed. After that the next test tube carrier 21 is loaded on carriage 41 of the transport means and the above-described method steps are carried out with respect to a plurality of test tubes carried by the latter test tube carrier and so on.

Test tube carrier 21 is moved stepwise and substantially in a plane defined by two axis X and Y which are perpendicular to each other.

The transferring of a test tube from a compartment 22 of test tube carrier to a predetermined position within measuring apparatus 32 or vice versa is effected by displacing the test tube 11 along its longitudinal axis and along an axis Z which is perpendicular to the plane defined by axis X and Y.

Although a preferred embodiment of the invention has been described using specific terms, such description is for illustrative purposes only, and it is to be understood that changes and variations may be made without departing from the spirit or scope of the following claims.

## Claims

1. A method for transporting a plurality of test tubes (11) in a measuring system, said test tubes being carried by a test tube carrier (21) which comprises a plurality of compartments (22), each of which is adapted to receive and hold a test tube, said method comprising:
(a) moving a first test tube carrier (21) within said measuring system for successively aligning a compartment (22) of said first test tube carrier (21) and thereby a test tube (11) arranged in that compartment with a receiving opening (31) of a measuring apparatus (32) which belongs to said system,
said moving of said first test tube carrier (21) being effected stepwise, each motion step being in one of two directions (X, Y) which are perpendicular to each other, and with a basis outer surface of said first test tube carrier (21) lying substantially in a plane defined by two axis (X, Y) which extend each along one of said directions,
(b) transferring one after the other a plurality of test tubes from said first test tube carrier (21) to a predetermined position in the measuring apparatus (32) by displacing each test tube being transferred in a first sense along a third axis (Z) which is substantially perpendicular to said plane,
a compartment of said first test tube carrier (21) being aligned with said receiving opening (31) of the measuring apparatus for said transferring of said test tube and said test tube being introduced through said receiving opening (31) into the measuring apparatus (32),
(c) effecting in the measuring apparatus (32) a measurement on a sample contained in the test tube transferred to the measuring apparatus, and
(d) transferring said test tube (11) after that measurement from the predetermined position in the measuring apparatus (32) to a compartment of a second test tube carrier (61) by displacing said test tube along said third axis (Z) in a second sense opposite to said first sense.

2. A method according to claim 1, wherein one and the same test tube carrier (21) performs the functions of said first and said second test tube carriers.

3. A method according to claim 2, wherein a test tube which has been transferred from its position in a compartment of a test tube carrier (21) to said predetermined position in the measuring apparatus is transferred from the latter position back to its original position in said compartment of said test tube carrier (21).

4. An apparatus for transporting a plurality of test tubes (11) in a measuring system for performing measurements on samples contained in said test tubes, said test tubes being carried by a test tube carrier (21) having an array of compartments (22) each of which is adapted to receive and hold one of said test tubes (11), said apparatus comprising
(a) transport means (41) for moving a first test tube carrier (21) within said measuring system and adapted for successively aligning a compartment (22) of said test tube carrier and thereby a test tube (11) arranged in that compartment with a receiving opening (31) of a measuring apparatus (32) which belongs to said measuring system,
said transport means being adapted for moving said first test tube carrier (21) stepwise, in one of two directions (X, Y) which are perpendicular to each other, and with a basis outer surface of said first test tube carrier (21) lying substantially in a plane defined by two axis (X, Y) which extend each along one of said directions, and
(b) transfer means (51) for transferring one after the other a plurality of test tubes from said first test tube carrier (21) to a predetermined position in the measuring apparatus by displacing each test tube being transferred in a first sense along a third axis (Z) which is substantially perpendicular to said plane,
a compartment of said first test tube carrier (21) being aligned with said receiving opening (31) of the measuring apparatus for said transferring of said test tube and said test tube being introduced through said receiving opening (31) into the measuring apparatus,
said transfer means being adapted for transferring a test tube (11) from the predetermined position in the measuring apparatus to a compartment of a second test tube carrier (61) by displacing said test tube along said third axis (Z) in a second sense opposite to said first sense.

5. An apparatus according to claim 4, wherein one and the same test tube carrier (21) performs the functions of said first and said second test tube carriers.

6. An apparatus according to claim 5, wherein said transfer means (51) are adapted for transferring a test tube from its position in a compartment of a test tube carrier (21) to said predetermined position in the measuring apparatus and for transferring said test tube from the latter position back to its position in said compartment of said test tube carrier (21).

7. An apparatus according to any of claims 4 to 6, wherein the test tube carrier (21, 61) is a single piece frame having a rectangular shape, an outer width of 86.7 millimeters, an outer length of 127 millimeters and a pitch of 9 millimeters between adjacent compartments.

8. An apparatus according to claim 7, wherein the test tube carrier (21, 61) has pitch of 4.5 millimeters between adjacent compartments.

9. An apparatus according to any of claims 4 to 8, wherein each compartment of the test tube carrier (21, 61) has an inner surface having a shape which is adapted to cooperate with a corresponding part of the outer surface of a test tube in order to define a predetermined resting position of the test tube in the compartment when the test tube is inserted into the compartment.

10. An apparatus according to any of claims 4 to 9, wherein each compartment of the test tube carrier (21, 61) has a top end opening and a bottom end opening, and wherein each compartment and each test tube are so configured and dimensioned that each test tube can only be inserted into and removed from a compartment of the test tube carrier through the bottom end opening of the compartment.
